# EUROPÄISCHE PATENTSCHRIFT

(11) **EP 2 093 465 B1**
(45) Veröffentlichungstag und Bekanntmachung des Hinweises auf die Patenterteilung: **17.08.2011**
(21) Anmeldenummer: 09153180.6
(22) Anmeldetag: 19.02.2009
(51) Int. Cl.: F16J 15/54, F16J 15/32, F15B 15/12

(54) **Scheibendichtung**
Sealing rail
Lame d'étanchéité

(30) Priorität: 23.02.2008 DE 102008010899
(43) Veröffentlichungstag der Anmeldung: 26.08.2009
(73) Patentinhaber: ZF Friedrichshafen AG, 88038 Friedrichshafen (DE)
(72) Erfinder: Beilner, Rainer, 97422 Schweinfurt (DE); Böttger, Christian, 96158 Frensdorf (DE)

(56) Entgegenhaltungen:
- EP-A- 1 061 266
- EP-A- 1 150 018
- EP-A- 1 614 905

## Beschreibung

Die Erfindung betrifft eine Scheibendichtung gemäß dem Oberbegriff von Patentanspruch 1.

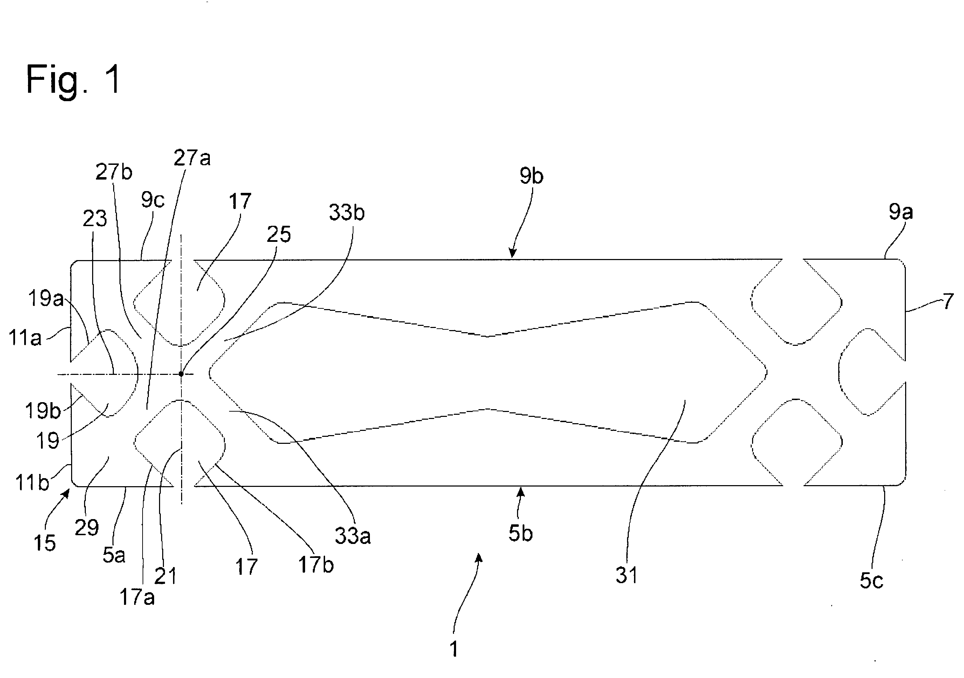

Aus der EP 1 150 018 A2 ist eine Scheibendichtung für einen Schwenkmotor bekannt, die aus einem Füllstück und einem außenliegenden Dichtungsrahmen besteht. Das Füllstück verfügt je nach Ausführungsform über eine Anzahl von Längsund Querschlitzen, die dem Füllstück eine axiale und radiale Elastizität verleihen. Die Variante nach Figur 1 weist ausschließlich Längsschlitze auf, die sich nahezu über die gesamte Länge des Füllstücks erstrecken. Am Übergangsbereich zwischen einer kurzen und einer langen Dichtkante des Dichtungsrahmens liegt am Füllstück ein relativ großer Radius zum Dichtungsrahmen vor, so dass die Vorspannung in dem besagten Übergangsbereich relativ gering ist.

Bei den weiteren Ausführungsformen nach den Figuren 3 bis 5 stellt sich das Problem, dass die Füllstücke auf den Übergangsbereich des Dichtungsrahmens eine ungleichmäßige Vorspannung ausüben, zumindest, wenn man die Vorspannung der beiden Längskanten miteinander vergleicht.

Aufgabe der vorliegenden Erfindung ist es, eine Scheibendichtung zu realisieren, deren Dichtungsrahmen eine verbesserte Vorspannung aufweist.

Erfindungsgemäß wird die Aufgabe durch die Merkmale des Patentanspruchs 1 gelöst,

Der große Vorteil der Erfindung besteht darin, dass insbesondere der Übergangsbereich des Dichtungsrahmens einer besonders zielgerichteten Vorspannung unterliegt.

Das Ziel besteht in der Beibehaltung einer großen Kontaktfläche zum Dichtungsrahmen.

Der Abstand der Aussparungen im Füllstück ist ausgehend vom Übergangsbereich gleich, so dass die Vorspannung exakt in den Übergangsbereich wirkt.

Die Aussparungen soll vorteilhafterweise eine mehr als dreiseitige Kontur aufweisen, wobei zwei Seiten der Aussparung mit einem Abstand in der Kontaktfläche des Füllstücks auslaufen. Dadurch wird ein größerer Bewegungsraum für den Vorspannsteg erreicht.

In weiterer vorteilhafter Ausgestaltung weist das Füllstück ein zentrales Fenster auf.

Ein Trennsteg zwischen einer Aussparung und dem Fenster ist elastisch verformbar. Eine Verformung des Vorspannstegs kann von dem Trennsteg wieder gegenläufig kompensiert werden, so dass die Kontaktfläche parallel verschiebbar ist.

Im Hinblick auf eine möglichst gleichförmige Vorspannung des Füllstücks auf den Dichtungsrahmen ist das Fenster in seiner Längsrichtung tailliert ausgeführt.

Anhand der folgenden Figurenbeschreibung soll die Erfindung näher erläutert werden.

Es zeigt:
- Fig. 1: Füllstück einer Scheibendichtung
- Fig. 2: Füllstück mit montiertem Dichtungsrahmen

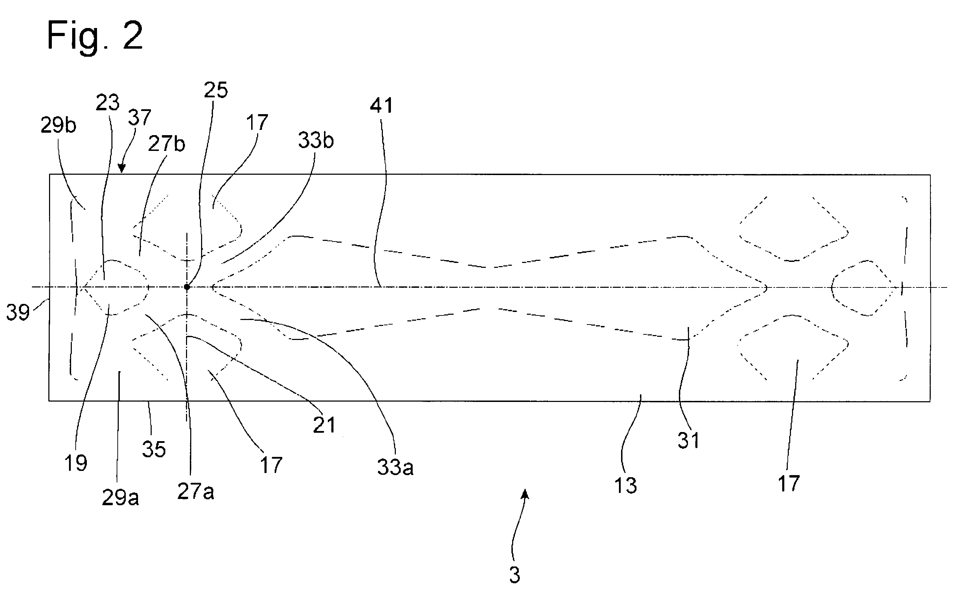

Die Figur 1 zeigt ein Füllstück 1 einer Scheibendichtung 3, wie sie beispielsweise in einem Schwenkmotor entsprechend der DE 42 29 025 A1 beschrieben ist. Das Füllstück 1 weist eine rechteckige Grundform auf. Der äußere Rand bildet Kontaktflächen 5; 7:9; 11 für einen elastischen Dichtungsrahmen 13 (s. Fig. 2). Als Material für das Füllstück können Kunststoffe aber auch metallische Werkstoffe dienen. Das Füllstück weist in einem Abstand am Übergangsbereich 15 zweier Seitenkanten 5; 11 Aussparungen 17; 19 auf, deren Hauptachsen 21; 23 im Punkt 25 sich schneiden. Die Aussparungen 17; 19 erweitern sich ausgehend von der jeweiligen Kontaktfläche 5; 11 für den Dichtrahmen 13 nach innen und verfügen über eine mehr als dreiseitige Kontur. In dieser konkreten Ausführung ist die Aussparung als ein Fünfeck bestimmt bzw. wobei zwei Seiten der Aussparung 17a; 17b; 19a; 19b mit einem Abstand in der Kontaktfläche 5; 11 des Füllstücks auslaufen, so dass die Kontaktfläche in mehrere getrennte Kontaktflächenbereiche 5a; 5b; 5c; 11a; 11 b unterteilt wird. Die Aussparungen 17; 19 bestimmen im Füllstück 1 einen Vorspannsteg 27a; 27b mit einem offenen Ende 29, das genau im Übergang 15 zweier Seitenkanten 5a; 11b ausläuft. Beide Aussparungen 17; 19 weisen den gleichen Abstand zum Übergangsbereich 15 auf, so dass der Vorspannsteg 27 einen Winkel von 45° zu einer Kontaktfläche aufweist. Das offene Ende29 verfügt über eine pfeilförmige Geometrie.

Des Weiteren umfasst das Füllstück 1 ein zentrales Fenster 31. Zwischen dem zentralen Fenster 31 und den Aussparungen 17; 19 besteht jeweils ein Trennsteg 33a; 33b, der elastisch verformbar ist. In seiner Längsrichtung ist das Fenster 31 tailliert ausgeführt ist.

Die Figur 2 zeigt die vollständige Scheibendichtung 3. Das Füllstück 1 ist in der Länge und der Breite mit einem gewissen Übermaß zum Dichtungsrahmen 13 ausgeführt, so dass dieser innerhalb der Scheibendichtung 3 unter einer Vorspannung in Längs- und Querrichtung steht. In einer zum besseren Verständnis etwas überzogenen Darstellung ist die Deformierbarkeit des Füllstücks 1 erkennbar. Die Vorspannstege 27a; 27b mit ihren pfeilförmigen Enden 29a; 29b wirken exakt in die Übergangsbereiche zweier Dichtungsseiten 35; 37; 39 des Dichtungsrahmens 13. Dabei werden die Vorspannstege 27a; 27b in Richtung der Längsachse 41 der Scheibendichtung 3 verformt, wie an der Aussparung 19 an der kurzen Dichtungsseite 39 des Füllstücks 1 erkennbar ist. Zusätzlich werden ab auch die Trennstege 33a; 33b zwischen den Aussparungen 17 und dem zentralen Fenster 31 in Richtung des Fensters verformt, so dass praktisch eine Parallelverschiebung der pfeilförmigen Enden 29a; 29b zur Längsachse 41 der Scheibendichtung 3 erfolgt und eine glattflächige Anlage des Dichtungsrahmens 13 an einer abzudichtenden Kante vorliegt.

Das taillierte zentrale Fenster 31 sorgt über die spezielle Fensterform für eine gleichmäßige Vorspannung der Kontaktfläche 5b; 9b zwischen den beiden Aussparungen 17 auf den Dichtungsrahmen 13.

## Patentansprüche

1. Scheibendichtung (3), umfassend einen mehrseitigen Dichtungsrahmen (13), der von einem im Dichtungsrahmen (13) angeordneten Füllstück (1) in einer Ebene axial und radial vorgespannt wird, wobei das Füllstück (1) Aussparungen (17; 19; 21) aufweist, die die Elastizität des Füllstücks (1) bestimmen, und das Füllstück (1) in einem Abstand zu einem Übergangsbereich (15) von zwei Seitenkanten des Dichtungsrahmens (13) Aussparungen (17; 19) aufweist, deren Hauptachsen (21; 23) sich schneiden,
**dadurch gekennzeichnet,**
**dass** sich die Aussparungen (17; 19) ausgehend von einer Kontaktfläche (5a; 5b; 5c; 11a; 11 c) zum Dichtungsrahmen (13) nach innen erweitern und die Aussparungen (17; 19) im Füllstück (1) einen Vorspannsteg (27a; 27b) mit einem offenen Ende (29) bestimmen, das eine pfeilförmige Geometrie aufweist.

2. Scheibendichtung nach Anspruch 1,
**dadurch gekennzeichnet,**
**dass** der Abstand der Aussparungen (17; 19) im Füllstück (1) ausgehend vom Übergangsbereich (15) gleich ist.

3. Scheibendichtung nach Anspruch 1,
**dadurch gekennzeichnet,**
**dass** die Aussparungen (17; 19) eine mehr als dreiseitige Kontur aufweist, wobei zwei Seiten (17a; 17b; 19a; 19b) der Aussparung (17; 19) mit einem Abstand in der Kontaktfläche (5a; 5b; 11 a; 11 b) des Füllstücks (1) auslaufen.

4. Scheibendichtung nach Anspruch 1,
**dadurch gekennzeichnet,**
**dass** das Füllstück (1) ein zentrales Fenster (31) aufweist.

5. Scheibendichtung nach Anspruch 4,
**dadurch gekennzeichnet,**
**dass** ein Trennsteg (33a; 33b) zwischen einer Aussparung (17) und dem Fenster (31) elastisch verformbar ist.

6. Scheibendichtung nach Anspruch 4,
**dadurch gekennzeichnet,**
**dass** das Fenster (31) in seiner Längsrichtung tailliert ausgeführt ist.

## Claims

1. Washer seal (3), comprising a multiple-side seal frame (13) which is prestressed in one plane axially and radially by a filler piece (1) which is arranged in the seal frame (13), the filler piece (1) having cut-outs (17; 19; 21) which determine the elasticity of the filler piece (1), and the filler piece (1) having cut-outs (17; 19) at a spacing from a transition region (15) of two side edges of the seal frame (13), the main axes (21; 23) of which cut-outs (17; 19) intersect, **characterized in that**, starting from a contact face (5a; 5b; 5c; 11a; 11c) with the seal frame (13), the cut-outs (17; 19) widen to the inside, and the cut-outs (17; 19) in the filler piece (1) define a prestressing land (27a; 27b) with an open end (29) which has an arrow-shaped geometry.

2. Washer seal according to Claim 1, **characterized in that** the spacing of the cut-outs (17; 19) in the filler piece (1) is identical, starting from the transition region (15).

3. Washer seal according to Claim 1, **characterized in that** the cut-outs (17; 19) have a more than three-sided contour, two sides (17a; 17b; 19a; 19b) of the cut-out (17; 19) running out at a spacing into the contact face (5a; 5b; 11a; 11b) of the filler piece (1).

4. Washer seal according to Claim 1, **characterized in that** the filler piece (1) has a central window (31).

5. Washer seal according to Claim 4, **characterized in that** a dividing land (33a; 33b) between a cut-out (17) and the window (31) is elastically deformable.

6. Washer seal according to Claim 4, **characterized in that** the window (31) is of waisted configuration in its longitudinal direction.

## Revendications

1. Lame d'étanchéité (3), comprenant un cadre d'étanchéité à plusieurs côtés (13), qui est précontraint axialement et radialement dans un plan par une pièce de remplissage (1) disposée dans le cadre d'étanchéité (13), la pièce de remplissage (1) présentant des évidements (17 ; 19 ; 21) qui déterminent l'élasticité de la pièce de remplissage (1), et la pièce de remplissage (1) présentant, à distance d'une zone de transition (15) de deux arêtes latérales du cadre d'étanchéité (13), des évidements (17 ; 19) dont les grands axes (21 ; 23) se coupent,
**caractérisée en ce que**
les évidements (17 ; 19) s'élargissent vers l'intérieur à partir d'une surface de contact (5a ; 5b ; 5c ; 11a ; 11c) jusqu'au cadre d'étanchéité (13) et les évidements (17 ; 19) définissent dans la pièce de remplissage (1) une nervure de précontrainte (27a ; 27b) avec une extrémité ouverte (29) qui présente une géométrie en forme de flèche.

2. Lame d'étanchéité selon la revendication 1,
**caractérisée en ce que**
la distance entre les évidements (17 ; 19) dans la pièce de remplissage (1) à partir de la région de transition (15) est identique.

3. Lame d'étanchéité selon la revendication 1,
**caractérisée en ce que**
les évidements (17 ; 19) présentent un contour ayant plus de trois côtés, deux côtés (17a ; 17b ; 19a ; 19b) de l'évidement (17 ; 19) se terminant à distance l'un de l'autre dans la surface de contact (5a ; 5b ; 11a ; 11b) de la pièce de remplissage (1).

4. Lame d'étanchéité selon la revendication 1,
**caractérisée en ce que**
la pièce de remplissage (1) présente une fenêtre centrale (31).

5. Lame d'étanchéité selon la revendication 4,
**caractérisée en ce**
**qu'**une nervure de séparation (33a ; 33b) entre un évidement (17) et la fenêtre (31) peut être déformée élastiquement.

6. Lame d'étanchéité selon la revendication 4,
**caractérisée en ce que**
la fenêtre (31) dans sa direction longitudinale est réalisée de manière cintrée.
